# EUROPEAN PATENT SPECIFICATION

(11) **EP 4 039 769 B1**
(45) Date of publication and mention of the grant of the patent: **09.07.2025**
(21) Application number: 19948001.3
(22) Date of filing: 04.10.2019
(51) Int. Cl.: C09K 5/14, F28D 20/00

(54) **THERMAL STORAGE DEVICE**
WÄRMESPEICHERVORRICHTUNG
DISPOSITIF ACCUMULATEUR DE CHALEUR

(43) Date of publication of application: 10.08.2022
(73) Proprietor: MITSUBISHI ELECTRIC CORPORATION, Chiyoda-ku Tokyo 100-8310 (JP)
(72) Inventor: NOBUTOKI, Hideharu, Tokyo 100-8310 (JP); TERAI, Mamoru, Tokyo 100-8310 (JP); OHO, Takumi, Tokyo 100-8310 (JP); NOMURA, Yasumitsu, Tokyo 100-8310 (JP); SATO, Minoru, Tokyo 100-8310 (JP)
(74) Representative: Meissner Bolte Partnerschaft mbB
(86) International application number: PCT/JP2019/039328
(87) International publication number: WO 2021/064990

(56) References cited:
- WO-A1-2019/159514
- CN-A- 101 117 572
- JP-A- 2006 232 940
- JP-A- 2007 044 673
- JP-A- 2007 044 673
- JP-A- 2017 222 742
- JP-B1- 6 501 990

## Description

### Technical Field

The present invention relates to a heat storage apparatus including a heat storage material.

### Background Art

In the past, heat storage apparatuses each having a heat storage material have been known. In facilities having heat sources, such as homes, offices, factories, or waste processing facilities, most of low-temperature exhaust heat of approximately 120 °C or less is discharged without being used. In order to effectively use such exhaust heat, it is required to use a heat storage material that stores low-temperature exhaust heat at a high density.

To satisfy this requirement, it is highly useful and preferable to use water at normal pressure, as a heat medium for the heat storage material. Thus, preferably, the heat storage material should have a melting point of 100 °C or less. As inorganic heat storage materials, inorganic hydrated salt, such as barium hydroxide octahydrate having a melting point of 78 °C and magnesium nitrate hexahydrate having a melting point of 89 °C, is present.

However, the inorganic hydrated salt has problems. That is, barium hydroxide octahydrate is specified as a deleterious substance, and magnesium nitrate hexahydrate corrodes metal. Therefore, these inorganic heat storage materials are not put to practical use. On the other hand, as organic heat storage materials, paraffin, fatty acids, sugar alcohol, etc., are present. However, paraffin, fatty acids, sugar alcohol, and other substances are not put to practical use because they have a small heat storage density because of the heat of fusion.

Patent Literature 1 discloses a heat storage material in which a mixture of a guest substance and water that is a host substance is cooled to produce a hydrate. Furthermore, in recent years, heat storage materials including hydrogel have been known. A heat storage material using hydrogel maintains a non-fluid property even in a temperature range above a phase transition temperature, and can stably maintain a non-fluid property even when being repeatedly cooled and heated such that its temperature varies to a lower temperature and a higher temperature through the phase transition temperature.

As such heat storage materials, Patent Literature 2 discloses a first gelled material, a second gelled material, and an inorganic or aqueous heat storage material that is held between the first gelled material and the second gelled material. The first gelled material is produced by crosslinking at least one polymer selected from polyacrylamide derivatives, polyvinyl alcohol, sodium polyacrylate, and sodium polymethacrylate. The second gelled material is polysaccharides, agar, or gelatin. Patent Literature 3 discloses a heat storage device including a heat exchanger that causes heat exchange to be performed between a heating fluid and a heat storage material to heat the heat storage material and store heat in the heat storage material Patent Literature 4 discloses a heat storage apparatus comprising as heat storage material a thermosensitive polymer gel including a thermosensitive polymer and water.

### List of Citations

### Patent Literature

Patent Literature 1: Japanese Patent JP 5 461 331 B2
Patent Literature 2: WO 2014/091938 A1
Patent Literature 3: Japanese Patent JP 6 501 990 B1
Patent Literature 4: JP 2007 044673 A

### Summary of the Invention

### Technical Problem

However, the heat storage materials disclosed in Patent Literature 1 and Patent Literature 2 have a small heat storage density. Thus, a thermal storage tank is made larger, and as a result, a heat storage apparatus including the thermal storage tank is also made larger. The thermal storage unit disclosed in Patent Literature 3 cannot be applied to a cooling apparatus, since a heat storage material cannot store cooling energy.

The present invention is applied to solve the above problems, and the object underlying the invention is to provide a heat storage apparatus that can be used in a cooling apparatus and is not made larger, as compared with existing heat source apparatuses.

### Solution to the Problem

A heat storage apparatus according to claim 1.

### Advantageous Effects of the Invention

According to the embodiment of the present invention, the heat storage material makes reversible hydrophilic-hydrophobic transition at a lower critical solution temperature, and the solvent included in the thermosensitive polymer gel is kept in a liquid state in the process of hydrophilic-hydrophobic transition. Thus, it is not made larger. Furthermore, a heat storage apparatus can store cooling energy in the heat storage material. The heat storage apparatus can thus be used in a cooling apparatus and is not made larger.

### Brief Description of the Drawings

- FIG. 1: is a circuit diagram of a heat storage system according to Embodiment 1.
- FIG. 2: is a sectional view of a heat storage apparatus according to Embodiment 1.
- FIG. 3: is a perspective view of the heat storage apparatus according to Embodiment 1.

### Description of Embodiments

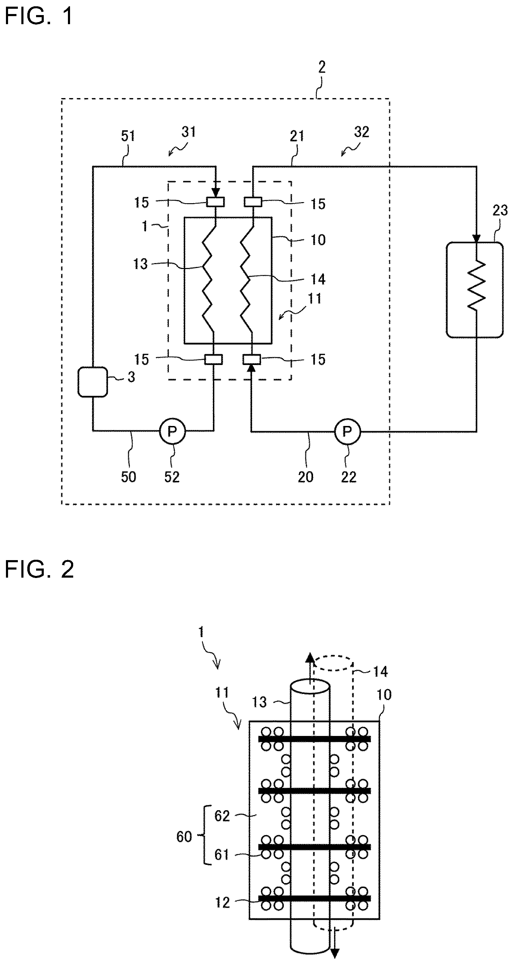

An embodiment of a heat storage apparatus according to the present invention will be described with reference to the drawings. The description concerning the embodiment is not limiting. In figures including FIG. 1 that will be referred to below, the relationships in size between components may be different from actual ones. In the following description, in order that the embodiment be easily understood, terms related to directions are used as appropriate. These terms are used only for explanation, that is, they are not limiting. As the terms expressing directions, for example, "upper", "lower", "right", "left", "front", and "back" are used.

### Embodiment 1

FIG. 1 is a circuit diagram of a heat storage system 2 according to Embodiment 1. The heat storage system 2 uses a heat storage apparatus 1 to perform air cooling or air heating at a heat transfer terminal 23. The heat storage system 2 includes a heat source 3, a heating/cooling pump 52, a circulation pump 22, the heat storage apparatus 1, a heating/cooling fluid, and a heat utilization fluid.

A lower joint 15 of a heating/cooling pipe 13 is connected to the heat source 3 by an inlet pipe 50 via the heating/cooling pump 52. The heat source 3 is connected to an upper joint 15 of the heating/cooling pipe 13 by an outlet pipe 51. As a result, a heat source circuit 31 is provided, and the heating/cooling fluid circulates in the heat source circuit 31.

The heat source 3 generates heat, and is, for example, an electric heater or a vapor compression heat pump that is driven by power. The heat source 3 heats the heating/cooling fluid that flows thereinto through the inlet pipe 50. The heating/cooling pump 52 is used to transfer the heating/cooling fluid. The heating/cooling pump 52 transfers, to the heat source 3, the heating/cooling fluid that flows through the inlet pipe 50, causes the heating/cooling fluid that flows out of the heat source 3 to flow through the outlet pipe 51, and transfers the heating/cooling fluid to the heating/cooling pipe 13.

The circulation pump 22 is used to transfer the heating/cooling fluid. The circulation pump 22 transfers, to the heat storage apparatus 1, the heat utilization fluid that flows through a return pipe 20, causes the heat utilization fluid that flows out of the heat storage apparatus 1 to flow through a feed pipe 21, and transfers the heat utilization fluid to the heat transfer terminal 23. The heating/cooling fluid is, for example, water, an antifreeze, such as ethylene glycol or propylene glycol, or refrigerant, such as HFC or CO₂.

A lower joint 15 of a heat utilization pipe 14 is connected to the heat transfer terminal 23 by the return pipe 20 via the circulation pump 22. An upper joint 15 of the heat utilization pipe 14 is connected to the heat transfer terminal 23, which is a heat utilization terminal, by the feed pipe 21. As a result, a utilization circuit 32 is provided, and the heat utilization fluid circulates in the utilization circuit 32. The heat utilization fluid is, for example, water or an antifreeze, such as ethylene glycol or propylene glycol.

The heat transfer terminal 23 is, for example, a floor heating panel, a fan coil unit, or a hot water radiator panel. The heat transfer terminal 23 is an example of a heat utilization terminal, and cooling energy or heating energy transferred from the heat utilization fluid in the heat transfer terminal 23 is utilized in, for example, air cooling or air heating.

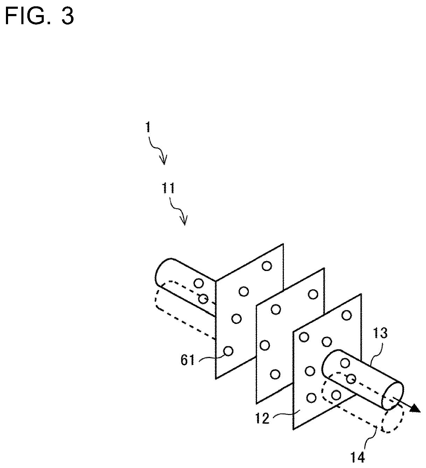

FIG. 2 is a sectional view of a heat storage apparatus 1 according to Embodiment 1. FIG. 3 is a perspective view of the heat storage apparatus 1 according to Embodiment 1. As illustrated in FIG. 2, the heat storage apparatus 1 includes a container 10 and a heat exchanger 11. The container 10 is, for example, substantially cuboid, is made of stainless steel (SUS), and has a thickness of 1 mm.

The container 10 is filled with a heat storage material 60. The container 10 houses the heat exchanger 11. In an upper surface and a lower surface of the container 10, a plurality of openings (not illustrated) are provided into which the heating/cooling pipe 13 and the heat utilization pipe 14 of the heat exchanger 11 are inserted.

The heat exchanger 11 is, for example, a fin-and-tube heat exchanger, and includes the heating/cooling pipe 13, the heat utilization pipe 14, and a plurality of fins 12. The heating/cooling pipe 13 is, for example, a cylindrical or flat tube made of metal such as SUS or Cu. In the heating/cooling pipe 13, a heating/cooling fluid to heat or cool the heat storage material 60 flows. The heating/cooling pipe 13 is inserted into the openings formed in the upper surface and the lower surface of the container 10, and extends from the inside of the container 10 to the outside thereof.

At both ends of the heating/cooling pipe 13, respective joints 15 are provided (see FIG. 1). The type of the joints 15 can be appropriately changed depending on the configuration of the heat storage system 2 including the heat storage apparatus 1. For example, quick fastener joints or Swagelok joints can be used as the joints 15. Since the joints 15 are provided at the heating/cooling pipe 13, it is possible to easily connect the heat storage apparatus 1 to the inlet pipe 50 and the outlet pipe 51.

The heat utilization pipe 14 is, for example, a cylindrical or flat pipe made of metal such as SUS or Cu. In the heat utilization pipe 14, a heat utilization fluid to receive heat from the heat storage material 60 flows. The heat utilization pipe 14 is inserted into openings formed in an upper surface and a lower surface of the container 10, and extends from the inside of the container 10 to the outside thereof. At both ends of the heat utilization pipe 14, joints 15 are provided (see FIG. 1).

The type of the joints 15 can be appropriately changed depending on the configuration of the heat storage system 2 including the heat storage apparatus 1. For example, quick fastener joints or Swagelok joints can be used as the joints 15. Since the joints 15 are provided at the heat utilization pipe 14, it is possible to easily connect the heat storage apparatus 1 to the return pipe 20 and the feed pipe 21.

The fins 12 are, for example, plate fins made of metal such as SUS or Al, and arranged substantially parallel to each other. In the fins 12, openings (not illustrated) are provided. The heating/cooling pipe 13 and the heat utilization pipe 14 are inserted into the openings of the fins 12 arranged substantially parallel to each other.

The heat exchanger 11 causes heat exchange to be performed between the heating/cooling fluid and the heat storage material 60, thereby heating or cooling the heat storage material 60 to store heat in the heat storage material 60, and also causes heat exchange to be performed between the heat utilization fluid and the heat storage material 60, thereby receiving heat from the heat storage material 60 and causing the heat storage material 60 to transfer heat therefrom.

The heat exchanger 11 may have any configuration as long as the heat exchanger 11 can cause the heat storage material 60 to be heated and to transfer heat. The shape and material of the heat exchanger 11 can be changed appropriately. For example, the heat exchanger 11 may be configured such that the fins 12 are not provided and the heating/cooling pipe 13 and the heat utilization pipe 14 are arranged at a high density. Furthermore, the heat exchanger 11 may be configured such that the following layers are stacked together: a layer through which the heating/cooling fluid flows; a layer through which the heat utilization fluid flows; and a layer filled with the heat storage material 60.

The heat storage material 60 has a thermosensitive polymer gel including a thermosensitive polymer 61 and a solvent selected from the group consisting of water 62, an organic solvent, and a compound of water 62 or organic solvents. The heat storage material 60 transfers heat or receives heat when the thermosensitive polymer 61 adsorbs or desorbs water 62. After the thermosensitive polymer 61 is hydrophobized, the density of the thermosensitive polymer 61 is higher than that of water 62. The density of thermosensitive polymer 61 containing hydrophobized bubbles is lower than that of water 62.

Next, the heat storage material 60 will be described in detail. The heat storage material 60 makes a reversible hydrophilic-hydrophobic transition at a lower critical solution temperature, and the solvent included in the thermosensitive polymer gel is kept in a liquid state during the process of hydrophilic-hydrophobic transition. The lower critical solution temperature is abbreviated as a LCST. The thermosensitive polymer 61 exhibits a hydrophilic property at a temperature below the LCST, and exhibits a hydrophobic property at a temperature above the LCST. In other words, the thermosensitive polymer 61 makes a reversible hydrophilic-hydrophobic transition at the lower critical solution temperature.

As the thermosensitive polymer 61, the following can be used: partially acetylated polyvinyl alcohol; polyvinyl methyl ether; methyl cellulose; polyethylene oxide; polyvinyl methyl oxazolidinone; poly N-ethyl acrylamide; poly N-ethyl methacrylamide; poly N-n-propyl acrylamide; poly N-n-propyl methacrylamide; poly N-isopropyl acrylamide; poly N-isopropyl methacrylamide; poly N-cyclopropyl acrylamide; poly N-cyclopropyl methacrylamide; poly N-methyl-N-ethyl acrylamide; poly N,N-diethyl acrylamide, poly N-methyl-N-isopropyl acrylamide; poly N-methyl-N-n-propyl acrylamide; poly N-acryloylpyrrolidine; poly-N-acryloylpiperidine; poly N-2-ethoxyethyl acrylamide; poly N-2-ethoxyethyl methacrylamide; poly N-3-methoxypropyl acrylamide; poly N-3-methoxypropyl methacrylamide; poly N-3-ethoxypropyl acrylamide; poly N-3-ethoxypropyl methacrylamide; poly N-3-isoproxylpropyl acrylamide; poly N-3-isoproxylpropyl methacrylamide; poly N-3-(2-methoxyethoxy)propyl acrylamide; poly N-3-(2-methoxyethoxy)propyl methacrylamide; poly N-tetrahydrofurfuryl acrylamide; poly N-tetrahydrofurfuryl methacrylamide; poly N-1-methyl-2-methoxyethyl acrylamide; poly N-1-methyl-2-methoxyethyl methacrylamide; poly N-1-methoxymethylpropyl acrylamide; poly N-1-methoxymethylpropyl methacrylamide; poly N-(2,2-)dimethoxyethyl)-N-methyl acrylamide; poly N-(1,3-dioxolan-2-ylmethyl)-N-methyl acrylamide; poly N-8-acryloyl-1,4-dioxa-8-aza-spiro[4,5]decane; poly N-2-methoxyethyl-N-ethyl acrylamide; poly N-2-methoxyethyl-N-n-propyl acrylamide; poly N-2-methoxyethyl-N-isopropyl acrylamide; and poly N,N-di(2-methoxyethyl) acrylamide.

The thermosensitive polymer 61 has a crosslinked structure, and has, at its molecular end, at least one functional group selected from the group consisting of a hydroxy group, a sulfonate group, an oxysulfonate group, a phosphate group, and an oxyphosphate group. The molar ratio between repeating units that form the thermosensitive polymer 61, the functional group, and the unit of the crosslinked structure falls within the range of 99:0.5:0.5 to 70:20:10. Regarding the thermosensitive polymer 61, it is preferable that the molar ratio between the repeating units that form the thermosensitive polymer, the functional group, and the unit of the crosslinked structure fall within the range of 98:1:1 to 77:18:5.

In the case where the percentage of the repeating units is too high, the heat storage density decreases. The case where the percentage of the repeating units is high corresponds to the case where when the total molecular weight of the repeating units, the functional group and the unit of the crosslinked structure is 100 mol%, the percentage of the repeating units exceeds 99 mol%.

By contrast, when the percentage of the repeating units is too low, the LCST is not exhibited. The case where the percentage of the repeating units is low corresponds to the case where when, for example, the total amount of the repeating unit, the functional group and the unit of the crosslinked structure is 100 mol%, the percentage of the repeating unit is below 70 mol%.

The unit of the crosslinked structure is introduced by applying a cross-linker in the process of producing the thermosensitive polymer 61, such as partially acetylated polyvinyl alcohol or polyvinyl methyl ether described above. The cross-linker may be referred to as a cross-linkable monomer. As the cross-linker, for example, the following are present: N,N'-methylenebisacrylamide; N,N'-diallylacrylamide; N,N'-diacryloylimide, N,N'-dimethacryloylimide; triallylformal; diallyl naphthalate; ethylene glycol diacrylate; ethylene glycol dimethacrylate; various polyethylene glycol di(meth)acrylates; propylene glycol diacrylate; propylene glycol dimethacrylate; various polypropylene glycol di(meth)acrylates; 1,3-butylene glycol diacrylate; 1,3-butylene glycol dimethacrylate; 1,4-butylene glycol dimethacrylate; various butylene glycol di(meth)acrylates; glycerol dimethacrylate; neopentyl glycol dimethacrylate; trimethylolpropane triacrylate; trimethylolpropane trimethacrylate; tetramethylolmethane tetramethacrylate; and divinyl derivatives; such as divinylbenzene.

The organic solvent is selected from polar organic solvents, and preferably, should be selected from the group consisting of alcohols, such as methanol, ethanol, propanol, isopropanol, isopentanol, and 2-methoxyethanol; ketones, such as acetone, methyl ethyl ketone, methyl n-propyl ketone, methyl isopropyl ketone, and methyl isoamyl ketone; ethers, such as ethylene glycol monobutyl ether, and propylene glycol monomethyl ether; methyl acetate; ethyl acetate; propyl acetate; n-butyl acetate; chloroform; acetonitrile; glycerol; dimethyl sulfoxide; N,N-dimethylformamide; tetrahydrofuran; pyridine; 1,4-dioxane; dimethylacetamide; N-methylpyrrolidone; propylene carbonate; and mixtures thereof.

The organic solvent is selected from nonpolar organic solvents, and preferably, should be selected from the group consisting of benzene, chlorobenzene; o-dichlorobenzene; toluene; o-xylene; dichloromethane; 1,1,2-trichlorotrifluoroethane; pentane; cyclopentane; hexane; cyclohexane; heptane; isooctane; diethyl ether; petroleum ether; pyridine; carbon tetrachloride; fatty acids; fatty acid esters; and mixtures thereof. Furthermore, the organic solvent is selected from oils, and preferably, should be selected from the group consisting of vegetable oils, essential oils, petrochemical oils, synthetic oils, and mixtures thereof. When an oil is used as the organic solvent, the organic solvent may be referred to as a lipophilic solvent. Otherwise, the organic solvent may be a mixture of at least one kind of polar organic solvent or nonpolar organic solvent and at least one kind of oil.

The thermosensitive polymer gel includes a building block expressed by the following general Formula (1); 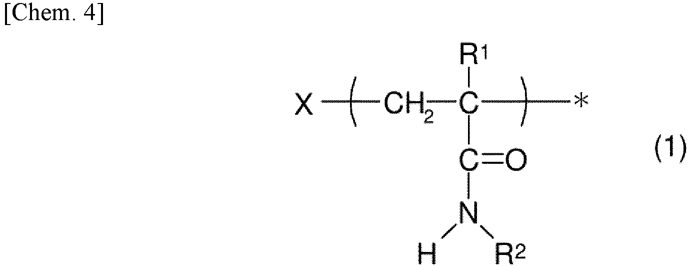
(where R¹ is a hydrogen atom or a methyl group, R² is an N-3-isopropoxypropyl group or an N-1-methoxymethylpropyl group, X is an atom in a covalent bond or at least one functional group selected from the group consisting of a hydroxy group, a sulfonate group, an oxysulfonate group, a phosphate group, and an oxyphosphate group, and * is an atom in a covalent bond), or includes a building block expressed by the following general Formula (2); 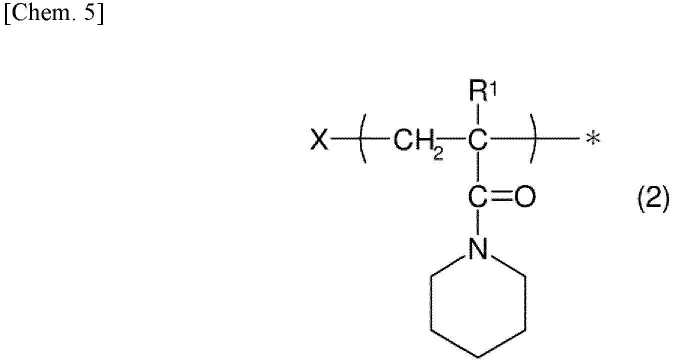
(where R¹ is a hydrogen atom or a methyl group, R² is an N-3-isopropoxypropyl group or an N-1-methoxymethylpropyl group, X is an atom in a covalent bond or at least one functional group selected from the group consisting of a hydroxy group, a sulfonate group, an oxysulfonate group, a phosphate group, and an oxyphosphate group, and * is an atom in a covalent bond); and also includes a building block expressed by the following general Formula (3), 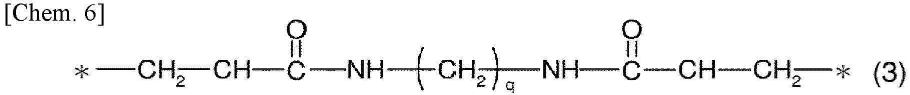
(where * is an atom in a covalent bond, and q is an integer of 1 to 3). The thermosensitive polymer gel has a crosslinked structure in which the atom in the covalent bond of the building block expressed by general Formula (1) or general Formula (2) is bonded to the atom in the covalent bond of the building block expressed by general Formula (3). In the thermosensitive polymer gel, the molar ratio between the building block expressed by general Formula (1) or general Formula (2), X which is the functional group, and the building block expressed by general Formula (3) is 99:0.5:0.5 to 70:23:7.

In the heat storage material 60, the molar ratio between the building block expressed by general Formula (1) or general Formula (2), X which is the functional group, and the building block expressed by general Formula (3) is 99:0.5:0.5 to 70:23:7, and preferably should be 98:1:1 to 77:18:5. In the case where the percentage of the building block expressed by general Formula (1) or general Formula (2) is too high, the heat storage density is low.

The case where the percentage of the building block expressed by general Formula (1) or general Formula (2) is high corresponds to the case where the percentage of the building block expressed by general Formula (1) or general Formula (2) exceeds 99 mol% when, for example, the total molecular weight of the building block expressed by general Formula (1) or general Formula (2), X which is the functional group, and the building block expressed by general Formula (3) is 100 mol%.

By contrast, in the case where the percentage of the building block expressed by general Formula (1) or general Formula (2) is too low, an LCST is not exhibited. The case where the percentage of the building block expressed by general Formula (1) or general Formula (2) is low corresponds to the case where the percentage of the building block expressed by general Formula (1) or general Formula (2) is below 70 mol% when, for example, the total molecular weight of the building block expressed by general Formula (1) or general Formula (2), X which is the functional group, and the building block expressed by general Formula (3) is 100 mol%. In Embodiment 1, the molar ratio between the building block expressed by general Formula (1) or general Formula (2), X which is the functional group, and the building block expressed by general Formula (3) is a theoretical value calculated from the amount of prepared material.

The heat storage material 60 has only to contain a building block expressed by general Formula (1) or general Formula (2), X that is the functional group, and the structural unit expressed by general Formula (3) at the above molar ratio. The number of repetitions of the building block expressed by general Formula (1) or general Formula (2) and the order in which the building blocks are bonded are not limited. In general, the number of repetitions of the building block expressed by general Formula (1) or general Formula (2) is an integer that falls within the range of 5 to 500.

The LCST of the heat storage material 60 can be set to fall within a wide range from 5 °C to 15 °C according mainly to the kind of R¹ and R² in general Formula (1) or general Formula (2). In general Formula (1), preferably, R¹ should be a hydrogen atom in order that the thermosensitive polymer 61 be easily produced. In general Formula (1), preferably, R² should be an N-3-isopropoxypropyl group in order that thermosensitivity be further improved.

In general Formula (1) or general Formula (2), X can be a functional group selected from the group consisting of a hydroxy group, a sulfonate group, an oxysulfonate group, a phosphate group, and an oxyphosphate group so as to satisfy the above molar ratio. It is preferable that of these functional groups, an oxysulfonate group be selected in order that radical polymerization be further improved.

In general Formula (3), preferably, q should be 1 in order that the heat storage density be further increased. The atoms in the covalent bonds in general Formula (1) or general Formula (2) and general Formula (3) may be formed by bonding the same kind of building blocks, may be formed by bonding different kinds of building blocks, or may partially form a branch structure. However, other branch structures can be applied.

The heat storage material 60 can be produced by radial polymerization of a polymerizable monomer expressed by the following general Formula (4), 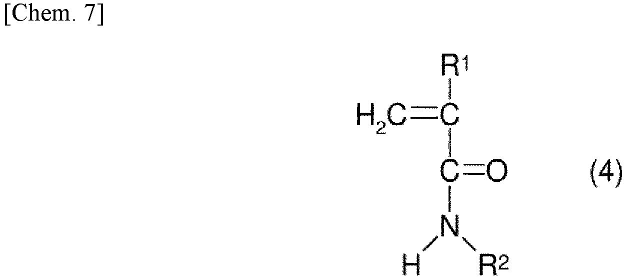
(where R¹ is a hydrogen atom or a methyl group, and R² is an N-3-isopropoxypropyl group or an N-1-methoxymethylpropyl group) or the following general Formula (5), 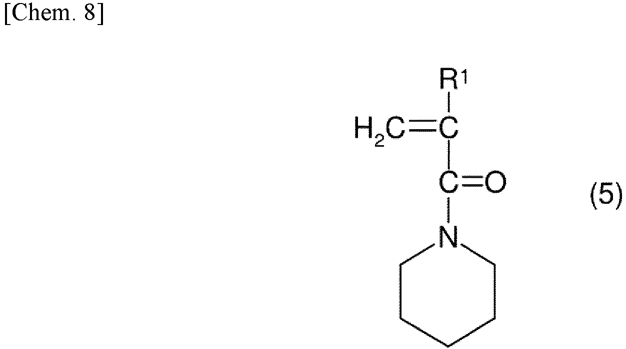
(where R¹ is a hydrogen atom or a methyl group, and R² is an N-3-isopropoxypropyl group or an N-1-methoxymethylpropyl group) in the presence of a cross-linker expressed by the following general Formula (6), 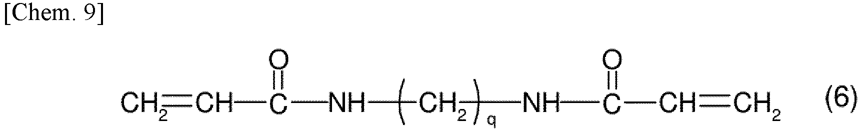
(where q is an integer of 1 to 3) and at least one polymerization initiator selected from the group consisting of potassium persulfate, sodium persulfate, ammonium persulfate, potassium superphosphate, and hydrogen peroxide.

The polymerizable monomer expressed by general Formula (4) provides the building block expressed by general Formula (1). The following are specific examples of the polymerizable monomer: N-3-isopropoxypropyl (meth)acrylamide; and N-1-methoxymethylpropyl (meth)acrylamide. Of these, preferably, N-3-isopropoxypropyl acrylamide, and N-1-methoxymethylpropyl acrylamide should be applied. "([M]eth)acryl" means methacryl or acryl. The polymerizable monomer expressed by general Formula (5) provides the building block expressed by general Formula (2). The following are specific examples of this polymerizable monomer: N-acryloyl piperidine; and N-methacryloyl piperidine. Of these, preferably, N-acryloyl piperidine should be applied.

The cross-linker expressed by general Formula (6) provides the building block expressed by general Formula (3). The following are specific examples of the cross-linker: N,N'-methylenebisacrylamide; N,N'-ethylenebisacrylamide; and N,N'-(trimethylene)bisacrylamide.

As the radial polymerization method, it is possible to use a bulk polymerization method, a solution polymerization method, an emulsion polymerization method, or other known methods. Of the polymerization initiators described above, preferably, potassium persulfate and ammonium persulfate should be used because they have good reactivity. Furthermore, it is possible to achieve rapid radical polymerization at low temperature using a combinational of a polymerization initiator, such as N,N,N',N'-tetramethylethylenediamine or N,N-dimethylparatoluidine, and the polymerization initiator described above.

The following are examples of solvents for use in radical polymerization: water; methanol; ethanol; n-propanol, isopropanol; 1-butanol; isobutanol; hexanol; benzene; toluene; xylene; chlorobenzene; dichloromethane; chloroform; carbon tetrachloride; acetone; methyl ethyl ketone; tetrahydrofuran; dioxane; acetonitrile; dimethyl sulfoxide; N,N-dimethylformamide; and N,N-dimethylacetamide. Of these solvents, preferably water should be used in order that the heat storage density be further increased. In general, it suffices that the radical polymerization reaction is performed at a temperature of 0 °C to 100 °C for 30 minutes to 24 hours.

When the radial polymerization is performed using water 62 as a solvent, particularly preferably, the total concentration of the polymerizable monomer expressed by general Formula (4) or general Formula (5), the cross-linker expressed by general Formula (6), and the polymerization initiator should be 2 mol/L to 3 mol/L in order that the heat storage density be further increased. In the case where the total concentration is less than 2 mol/L, the heat storage density of a produced heat storage material 60 may be small. By contrast, in the case where the total concentration is exceeds 3 mol/L, the produced heat storage material 60 may not exhibit the LCST.

The heat storage material 60 of Embodiment 1 can achieve a relatively low thermal storage operation temperature (100 °C or lower) and a high heat storage density. The reason for this seems to be as follows. The thermosensitive polymer 61 having a LCST exhibits hydrophilic nature at a temperature lower than the LCST or exhibits hydrophobic nature at a temperature above the LCST. The thermosensitive polymer 61 in the heat storage material 60 of Embodiment 1 has a high cross-link density and a highly close-packed structure at terminals of branched polymer.

Thus, the molecules of water adsorbed in the thermosensitive polymer 61 are arranged at a high density as in an existing thermosensitive polymer 61, but are arranged at a low density at a temperature higher than the LCST. In the thermosensitive polymer 61 in the heat storage material 60 of Embodiment 1, the density of the molecules arranged greatly varies. The above seems to be why the heat storage material 60 of Embodiment 1 can achieve a low thermal storage operation temperature as in the existing themosensitive polymer 61, but also achieve a high heat storage density.

According to Embodiment 1, the heat storage material 60 makes a reversible hydrophilic-hydrophobic transition at the lower critical solution temperature, and the solvent included in the thermosensitive polymer gel is kept in a liquid state in the process of hydrophilic-hydrophobic transition. Thus, it is not made larger. The heat storage material 60 can store cooling energy. The heat storage apparatus 1 can thus be used in a cooling apparatus and is not made larger.

During thermal storage in the heat storage material 60 and heat transfer from the heat storage material 60, water 62 is in a liquid state. Because of this feature, the heat storage apparatus 1 requires neither a condenser that condenses and liquefies water vapor nor a water transfer passage through which liquid water flows. Thus, the heat storage apparatus 1 to be used in an air-conditioning apparatus or a cooling and heating apparatus can be made smaller.

The liquid water content of the heat storage material 60 of Embodiment 1 is not particularly limited; however, preferably, it should fall within the range of 70 mass% to 99 mass%. The liquid water content can be determined as follows: after the weight of the heat storage material 60 containing water is measured at room temperature, the heat storage material 60 is put in a constant temperature reservoir, water of the heat storage material 60 is evaporated in the constant temperature reservoir at a drying temperature of 60 °C to 120 °C until no liquid remains in the heat storage material 60 or the weight thereof no longer decreases, the weight of the heat storage material 60 is then measured, and a substance corresponding to a decrease in the weight is assumed to be fluid.

This method is called a loss-on-drying method. Furthermore, the heat storage material 60 of Embodiment 1 and Embodiment 2 may be made porous. In the case where the heat storage material 60 is made porous, the temperature-responsiveness is improved. As a method of making the heat storage material 60 porous, for example, the following method is present: a mixed solution that contains the polymerizable monomer, the cross-linker, the polymerization initiator as describe above, and a porogen (pore-forming agent) is prepared, a crosslinked structure is formed through the radical polymerization reaction, and the porogen is then removed by washing.

In the radical polymerization reaction using water 62 as a solvent, preferable porogen is a water-soluble carbohydrate, such as sucrose, maltose, cellobiose, lactose, sorbitol, xylitol, glucose, or fructose. A porogen composition containing such a water-soluble carbohydrate and polyethylene glycol, polyvinylpyrrolidone, polyvinyl alcohol or a mixture thereof may be used. As another method of making the heat storage material 60 porous, a method of freeze-drying the thermosensitive polymer 61 containing fluid to remove the fluid is present.

The thermosensitive polymer 61 of Embodiment 1 can also be produced by coating a metal surface of the inside in the container 10 with a mixed solution containing at least the polymerizable monomer, the cross-linker, and the polymerization initiator as described above, and causing radical polymerization. The metal is, for example, stainless steel, copper, or aluminum. The mixed solution may contain an activator for the metal surface, a coupling agent, or other agents. The thermosensitive polymer 61 can also be produced by emitting radial rays onto a coating of the mixed solution.

### Examples

Embodiment 1 will be specifically described by referring to examples below, but Embodiment 1 is not limited to the examples.

### Examples 1 to 6 and Comparative Examples 1 to 6

In the examples, respective thermosensitive polymers 61 ware produced by heating aqueous solution of raw material with respective compositions indicated in table 1 in a nitrogen atmosphere while increasing a temperature from room temperature to 50 °C within one hour. After being dried, the thermosensitive polymer 61 of each example was subjected to equilibrium swelling in distilled water to form a thermosensitive polymer gel. The thermosensitive polymer gel was encased in an aluminum airtight container, the aluminum airtight container was sealed, and the endothermic peak temperature and the heat storage density of the thermosensitive polymer were measured with a differential scanning calorimeter. The abbreviations in table 1 represent the following compounds: A is N-3-isopropoxypropyl acrylamide; B is N-1-methoxymethylpropyl acrylamide; C is N-acryloyl piperidine: MBA is N,N'-methylenebis acrylamide; KPS is potassium persulfate; and TEMED is N,N,N',N'-tetramethylethylenediamine

**[Table 1]**

| | Polymerizable Monomer (mmol/L) | | MBA (mmol/L) | KPS (mmol/L) | TEMED (mmol/L) |
|---|---|---|---|---|---|
| Example 1 | A | 2250 | 23 | 23 | 34 |
| Example 2 | A | 2250 | 65 | 65 | 34 |
| Example 3 | B | 2250 | 23 | 23 | 34 |
| Example 4 | B | 2250 | 65 | 65 | 34 |
| Example 5 | C | 2250 | 23 | 23 | 34 |
| Example 6 | C | 2250 | 65 | 65 | 34 |
| Comparative Example 1 | A | 600 | 1 | 1 | 1 |
| Comparative Example 2 | A | 300 | 3 | 3 | 1 |
| Comparative Example 3 | B | 600 | 1 | 1 | 1 |
| Comparative Example 4 | B | 300 | 3 | 3 | 1 |
| Comparative Example 5 | C | 600 | 1 | 1 | 1 |
| Comparative Example 6 | C | 300 | 3 | 3 | 1 |

The results of the measurement are indicated in Table 2.

**[Table 2]**

| | Endothermic Peak Temperature (°C) | Heat storage density (J/g) |
|---|---|---|
| Example 1 | 9 | 243 |
| Example 2 | 10 | 221 |
| Example 3 | 11 | 210 |
| Example 4 | 13 | 215 |
| Example 5 | 7 | 360 |
| Example 6 | 8 | 383 |
| Comparative Example 1 | 8 | 22 |
| Comparative Example 2 | 9 | 24 |
| Comparative Example 3 | 10 | 15 |
| Comparative Example 4 | 10 | 16 |
| Comparative Example 5 | 5 | 38 |
| Comparative Example 6 | 5 | 40 |

As can be seen from the results in table 2, the thermosensitive polymer gels produced in examples 1 to 6 had very low endothermic peak temperatures that fall within the range of 8 °C to 13 °C and high thermal storage densities that fall within the range of 210 J/g to 844 J/g. In other words, the thermosensitive polymer gels of examples 1 to 6 had high thermal storage densities from 210 J/g to 383 J/g, which were much higher than those of existing heat storage materials 60, such as tetra-n-butyl ammonium bromide hydrate, at low thermal storage operation temperatures from 8 °C to 13 °C.

In the reversible hydrophilic-hydrophobic transition of the thermosensitive polymer gels at thermal storage operation temperatures, the water temperature was 8 °C to 13 °C, and water was in a liquid state. The thermosensitive polymer gels produced in comparative examples 1 to 6 had low endothermic peak temperatures that fall within the range of 8 °C to 10 °C, but had significantly low thermal storage densities that fall within the range of 15 J/g to 40 J/g.

As described above, unlike the existing heat storage materials 60, the heat storage materials 60 produced in examples 1 to 6 had high thermal storage densities at low operation temperatures. Heat storage apparatuses 1 using the thermosensitive polymer gels produced in examples 1 to 6 could be made smaller than an existing storage apparatus by approximately 10% to 90% according to the heat storage density.

### Reference Signs List

- 1: heat storage apparatus
- 2: heat storage system
- 3: heat source
- 10: container
- 11: heat exchanger
- 12: fin
- 13: heating/cooling pipe
- 14: heat utilization pipe
- 15: joint
- 20: return pipe
- 21: feed pipe
- 22: circulation pump
- 23: heat transfer terminal
- 31: heat source circuit
- 32: utilization circuit
- 50: inlet pipe
- 51: outlet pipe
- 52: heating/cooling pump
- 60: heat storage material
- 61: thermosensitive polymer
- 62: water

## Claims

1. A heat storage apparatus comprising:
- a container (10) sealed, with a heat storage material (60) encased in the container (10), the heat storage material (60) including a thermosensitive polymer gel including a thermosensitive polymer (61) and a solvent selected from the group consisting of water, organic solvents, and compounds of water or organic solvents; and
- a heat exchanger (11) housed in the container (10), and configured to cause heat exchange to be performed between the heat storage material (60) and a heating/cooling fluid to heat or cool the heat storage material (60), and store heating energy or cooling energy in the heat storage material (60), the heat exchanger (60) being configured to cause heat exchange to be performed between the heat storage material (60) and a heat utilization fluid to receive heat from the heat storage material (60) and to transfer heat from the heat storage material (60),
- wherein the heat storage material (60) makes a reversible hydrophilic-hydrophobic transition at a lower critical solution temperature, and the solvent included in the thermosensitive polymer gel is kept in a liquid state in a process of hydrophilic-hydrophobic transition,
- wherein the thermosensitive polymer (61) has a crosslinked structure, and has, at a molecular terminal of the thermosensitive polymer (61), at least one functional group selected from the group consisting of a hydroxy group, a sulfonate group, an oxysulfonate group, a phosphate group, and an oxyphosphate group, and
- wherein a molar ratio between repeating units that form the thermosensitive polymer (61), the functional group, and a unit of the crosslinked structure falls within the range of 99:0.5:0.5 to 70:20:10.

2. The heat storage apparatus of claim 1,
wherein the heat exchanger (11) includes
a heating/cooling pipe (13) through which the heating/cooling fluid flows, and
a heat utilization pipe (14) through which the heat utilization fluid flows.

3. The heat storage apparatus of claim 1 or 2,
wherein the thermosensitive polymer gel includes
a building block expressed by general Formula (1) below, 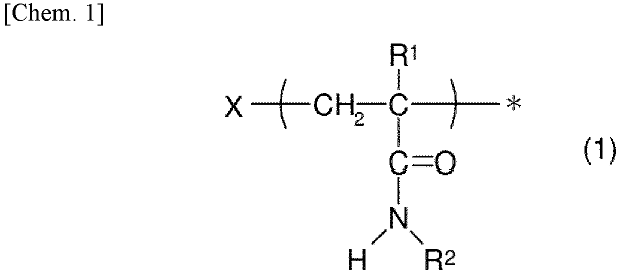
where R¹ is a hydrogen atom or a methyl group, R² is an N-3-isopropoxypropyl group or an N-1-methoxymethylpropyl group, X is an atom in a covalent bond or at least one functional group selected from the group consisting of a hydroxy group, a sulfonate group, an oxysulfonate group, a phosphate group, and an oxyphosphate group, and * is an atom in a covalent bond or general Formula (2) below, 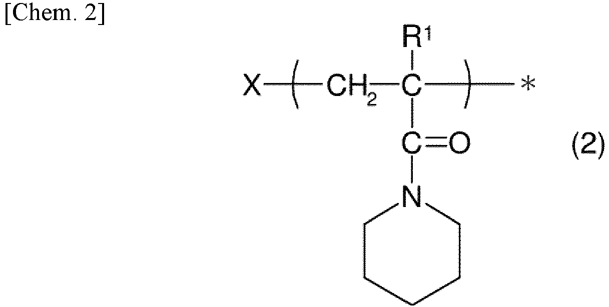
where R¹ is a hydrogen atom or a methyl group, X is an atom in a covalent bond or at least one functional group selected from the group consisting of a hydroxy group, a sulfonate group, an oxysulfonate group, a phosphate group, and an oxyphosphate group, and * is an atom in a covalent bond, and a building block expressed by general Formula (3) below, 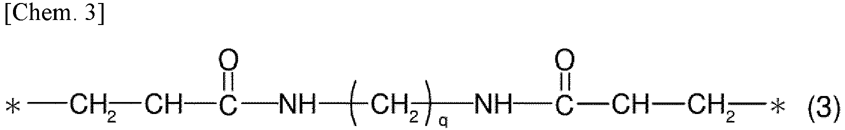
where * is a covalent bond, and q is an integer of 1 to 3, the thermosensitive polymer gel has a crosslinked structure in which the atom in the covalent bond of the building block expressed by general Formula (1) or general Formula (2) is bonded to the atom in the covalent bond of the building block expressed by general Formula (3), and
a molar ratio between the building block expressed by general Formula (1) or general Formula (2), X that is the functional group, and the building block expressed by general Formula (3) falls within the range of 99:0.5:0.5 to 70:23:7.

## Patentansprüche

1. Wärmespeichergerät, umfassend:
- einen Behälter (10), der mit einem Wärmespeichermaterial (60) abgedichtet ist, das in dem Behälter (10) eingeschlossen ist, wobei das Wärmespeichermaterial (60) ein wärmeempfindliches Polymergel, das ein wärmeempfindliches Polymer (61) beinhaltet, und ein Lösungsmittel beinhaltet, das aus der Gruppe ausgewählt ist, die aus Wasser, organischen Lösungsmitteln und Verbindungen aus Wasser oder organischen Lösungsmitteln besteht; und
- einen Wärmetauscher (11), der in dem Behälter (10) untergebracht ist und dazu konfiguriert ist, zu bewirken, dass ein Wärmeaustausch zwischen dem Wärmespeichermaterial (60) und einem Heiz-/Kühlfluid durchgeführt wird, um das Wärmespeichermaterial (60) zu erwärmen oder zu kühlen und um Heizenergie oder Kühlenergie in dem Wärmespeichermaterial (60) zu speichern, wobei der Wärmetauscher (60) dazu konfiguriert ist, zu bewirken, dass ein Wärmeaustausch zwischen dem Wärmespeichermaterial (60) und einem Wärmenutzungsfluid durchgeführt wird, um Wärme von dem Wärmespeichermaterial (60) aufzunehmen, und Wärme von dem Wärmespeichermaterial (60) zu übertragen,
- wobei das Wärmespeichermaterial (60) einen reversiblen hydrophil-hydrophob-Übergang bei einer niedrigeren kritischen Lösungstemperatur ausführt und das Lösungsmittel, das in dem wärmeempfindlichen Polymergel beinhaltet ist, in einem flüssigen Zustand in einem Prozess eines hydrophil-hydrophob-Übergangs gehalten wird,
- wobei das wärmeempfindliche Polymer (61) eine vernetzte Struktur aufweist und an einem molekularen Terminal des wärmeempfindlichen Polymers (61) mindestens eine funktionelle Gruppe aufweist, die ausgewählt ist aus der Gruppe bestehend aus einer Hydroxygruppe, einer Sulfonatgruppe, einer Oxysulfonatgruppe, einer Phosphatgruppe und einer Oxyphosphatgruppe, und
- wobei ein Molverhältnis zwischen sich wiederholenden Einheiten, die das wärmeempfindliche Polymer (61) bilden, der funktionellen Gruppe und einer Einheit der vernetzten Struktur in den Bereich von 99:0,5:0,5 bis 70:20:10 fällt.

2. Wärmespeichergerät nach Anspruch 1,
wobei der Wärmetauscher (11) Folgendes beinhaltet
ein Heiz-/Kühlrohr (13), durch welches das Heiz-/Kühlfluid strömt, und
ein Wärmenutzungsrohr (14), durch welches das Wärmenutzungsfluid strömt.

3. Wärmespeichergerät nach Anspruch 1 oder 2,
wobei das wärmeempfindliche Polymergel Folgendes beinhaltet
einen Baustein, ausgedrückt durch die nachstehende allgemeine Formel (1), 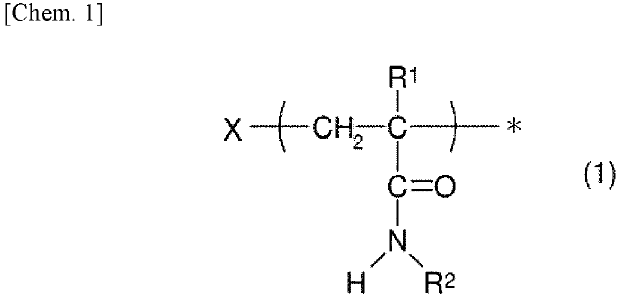
wobei R¹ ein Wasserstoffatom oder eine Methylgruppe ist, R² eine N-3-Isopropoxypropylgruppe oder eine N-1-Methoxymethylpropylgruppe ist, X ein Atom in einer kovalenten Bindung oder mindestens eine funktionelle Gruppe ist, ausgewählt aus der Gruppe bestehend aus einer Hydroxygruppe, einer Sulfonatgruppe, einer Oxysulfonatgruppe, einer Phosphatgruppe und einer Oxyphosphatgruppe, und * ein Atom in einer kovalenten Bindung ist
oder durch die nachstehende allgemeine Formel (2), 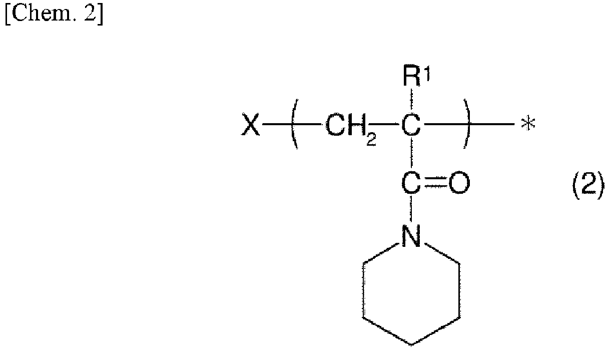
wobei R¹ ein Wasserstoffatom oder eine Methylgruppe ist, X ein Atom in einer kovalenten Bindung oder mindestens eine funktionelle Gruppe ist, ausgewählt aus der Gruppe bestehend aus einer Hydroxygruppe, einer Sulfonatgruppe, einer Oxysulfonatgruppe, einer Phosphatgruppe und einer Oxyphosphatgruppe, und * ein Atom in einer kovalenten Bindung ist, und
einen Baustein, ausgedrückt durch die nachstehende allgemeine Formel (3), 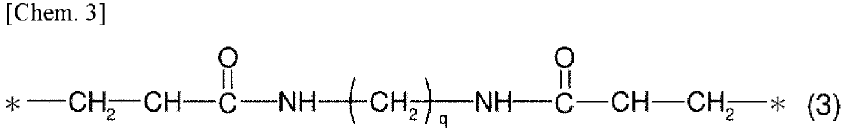
wobei * eine kovalente Bindung ist und q eine Ganzzahl von 1 bis 3 ist,
das wärmeempfindliche Polymergel eine vernetzte Struktur aufweist, in der das Atom in der kovalenten Bindung des Bausteins, ausgedrückt durch die allgemeine Formel (1) oder die allgemeine Formel (2), an das Atom in der kovalenten Bindung des Bausteins, ausgedrückt durch die allgemeine Formel (3), gebunden ist, und
ein Molverhältnis zwischen dem Baustein, ausgedrückt durch die allgemeine Formel (1) oder die allgemeine Formel (2), X, d.h. der funktionellen Gruppe, und dem Baustein, ausgedrückt durch die allgemeine Formel (3), in den Bereich von 99:0,5:0,5 bis 70:23:7 fällt.

## Revendications

1. Appareil de stockage de chaleur comprenant :
- un contenant (10) scellé, avec un matériau de stockage de chaleur (60) enfermé dans le contenant (10), le matériau de stockage de chaleur (60) incluant un gel polymère thermosensible incluant un polymère thermosensible (61) et un solvant choisi dans le groupe consistant en de l'eau, des solvants organiques, et des composés d'eau ou de solvants organiques ; et
- un échangeur de chaleur (11) logé dans le contenant (10) et configuré pour provoquer un échange de chaleur entre le matériau de stockage de chaleur (60) et un fluide de chauffage/refroidissement pour chauffer ou refroidir le matériau de stockage de chaleur (60) et stocker l'énergie de chauffage ou l'énergie de refroidissement dans le matériau de stockage de chaleur (60), l'échangeur de chaleur (60) étant configuré pour provoquer un échange de chaleur entre le matériau de stockage de chaleur (60) et un fluide d'utilisation de chaleur pour recevoir de la chaleur du matériau de stockage de chaleur (60) et pour transférer de la chaleur du matériau de stockage de chaleur (60),
- dans lequel le matériau de stockage de chaleur (60) effectue une transition hydrophile-hydrophobe réversible à une température de solution critique inférieure, et le solvant inclus dans le gel polymère thermosensible est maintenu dans un état liquide dans un processus de transition hydrophile-hydrophobe,
- dans lequel le polymère thermosensible (61) a une structure réticulée, et a, à une terminaison moléculaire du polymère thermosensible (61), au moins un groupe fonctionnel choisi dans le groupe consistant en un groupe hydroxy, un groupe sulfonate, un groupe oxysulfonate, un groupe phosphate et un groupe oxyphosphate, et
- dans lequel un rapport molaire entre des motifs répétés qui forment le polymère thermosensible (61), le groupe fonctionnel et un motif de la structure réticulée se situe dans la plage de 99:0,5:0,5 à 70:20: 10.

2. Appareil de stockage de chaleur selon la revendication 1,
dans lequel l'échangeur de chaleur (11) inclut
un tuyau de chauffage/refroidissement (13) à travers lequel le fluide de chauffage/refroidissement s'écoule, et
un tuyau d'utilisation de chaleur (14) à travers lequel le fluide d'utilisation de chaleur s'écoule.

3. Appareil de stockage de chaleur selon la revendication 1 ou 2,
dans lequel le gel polymère thermosensible inclut
un élément constitutif exprimé par la formule générale (1) ci-dessous, 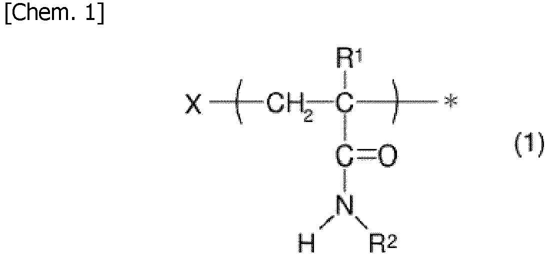 où
R¹ est un atome d'hydrogène ou un groupe méthyle, R² est un groupe N-3-isopropoxypropyle ou un groupe N-1-méthoxyméthylpropyle, X est un atome dans une liaison covalente ou au moins un groupe fonctionnel choisi dans le groupe consistant en un groupe hydroxy, un groupe sulfonate, un groupe oxysulfonate, un groupe phosphate et un groupe oxyphosphate, et * est un atome dans une liaison covalente,
ou la formule générale (2) ci-dessous, 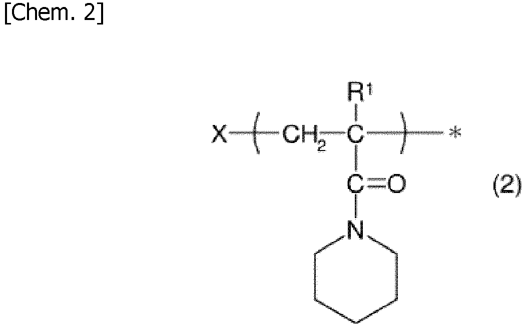 où
R¹ est un atome d'hydrogène ou un groupe méthyle, X est un atome dans une liaison covalente ou au moins un groupe fonctionnel choisi dans le groupe consistant en un groupe hydroxy, un groupe sulfonate, un groupe oxysulfonate, un groupe phosphate et un groupe oxyphosphate, et * est un atome dans une liaison covalente, et
un élément constitutif exprimé par la formule générale (3) ci-dessous, 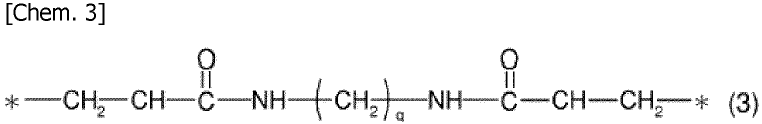
où * est une liaison covalente, et q est un entier de 1 à 3,
le gel polymère thermosensible a une structure réticulée dans laquelle l'atome dans la liaison covalente de l'élément constitutif exprimé par la formule générale (1) ou la formule générale (2) est lié à l'atome dans la liaison covalente de l'élément constitutif exprimé par la formule générale (3), et
un rapport molaire entre l'élément constitutif exprimé par la formule générale (1) ou la formule générale (2), X qui est le groupe fonctionnel, et l'élément constitutif exprimé par la formule générale (3) se situe dans la plage de 99:0,5:0,5 à 70:23:7.
